# EUROPEAN PATENT APPLICATION

(11) **EP 4 838 399 A1**
(43) Date of publication of application: **11.11.2026**
(21) Application number: 25174418.1
(22) Date of filing: 06.05.2025
(51) Int. Cl.: G06F 30/23, G06F 30/27, G06F 30/28, G06F 30/398

(54) **A FAST MODELING METHOD FOR COOLANT FLOWRATE TRANSIENTS USING AI ALGORITHM**

(71) Applicant: Volvo Car Corporation, 405 31 Göteborg (SE)
(72) Inventor: ZHANG, Chi, SE-405 31 Göteborg (SE)
(74) Representative: Nederlandsch Octrooibureau

(57) **Abstract**

A method is used to estimate a thermal response of a semiconductor device to a fluid. The method comprises modelling a thermal behaviour of a semiconductor device (100) by creating a model comprising a network (400) having a plurality of model elements (dT₁, dT₂, dT₃, dT₄, dT₅) arranged in sequence, each model element comprising a thermal capacitor (C) and a thermal resistor (R). At least one model element (dT₅) of the plurality of model elements is provided with a variable thermal capacitor (C5) having a variable thermal capacitance and/or a variable thermal resistor (R5) having a variable thermal resistance. A flow rate (ft) of a fluid is mapped to the variable thermal capacitance (C5) and the variable thermal resistance (R5). The model can estimate a thermodynamic parameter (T_{J}, P_{Loss}, _{TA}) associated with the semiconductor device.

## Description

### Technical Field

The present disclosure relates to estimating a thermal response of a semiconductor device to a fluid. The present disclosure further relates to designing a semiconductor device. The present disclosure further relates to a semiconductor device.

### Background of the Present Disclosure

The market for electrical vehicles is facing a substantial demand on higher efficiency cars with lower cost and higher reliability. In this regard, the increasing application of electrical vehicles is driving the needs of power semiconductors, especially Silicon Carbide (SiC) devices, due to their significantly reduced switching losses. However, there are still some challenges regarding thermal management for SiC power modules since it typically has a smaller die size compared with insulated-gate bipolar transistor (IGBT) devices.

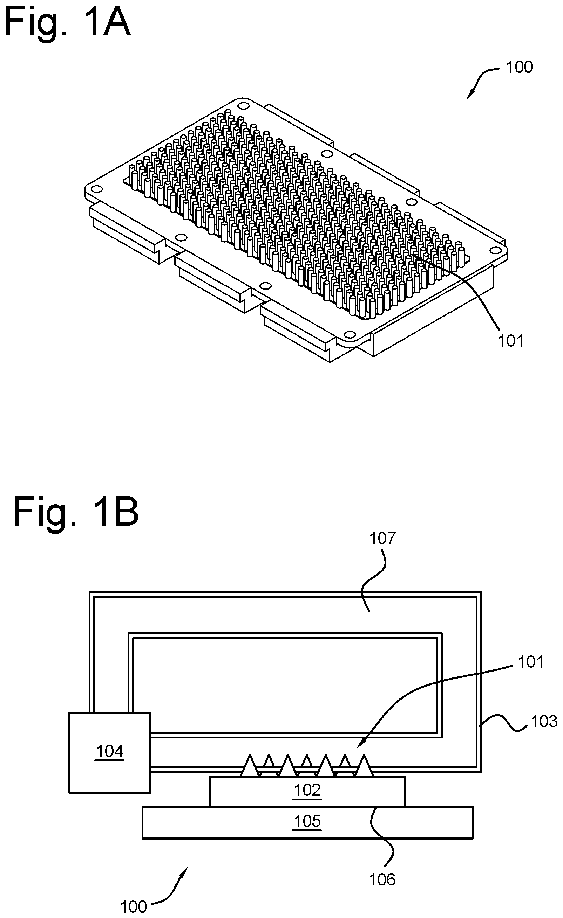

In the design stage of a traction inverter, it is therefore necessary to take into account the thermal (side) effects occurring in power semiconductors. This can be addressed by inclusion of, for example, a liquid-based cooling system. FIG. 1A shows an example of a semiconductor device 100 with cooling fins 101. Cooling fluid may be caused to flow along these cooling fins to transfer heat from the semiconductor device 100 into the cooling fluid.

Thermodynamical models are known to model the thermodynamic behaviour of such systems that include power semiconductors and cooling systems to cool the power semiconductors. For example a Foster thermal network and a Cauer thermal network is described in "Transient Dual Interface Test Method for the Measurement of the Thermal Resistance Junction-to-Case of Semiconductor Devices with Heat Flow Through a Single Path", JEDEC Standard, JESD51-14, November 2010, Jedec Solid State Technology Association. However, it may be difficult to determine the cooling behaviour of the system, which makes it difficult to set maximum allowable operating power and optimal cooling system parameters, for example.

The background section is merely intended to provide a contextual overview of some current issues and is not intended to be exhaustive. Other contextual information may become apparent to a person of skill in the art upon review of the following detailed description.

### Summary of the Present Disclosure

It would be advantageous to have better estimates of the thermal response of a semiconductor device to a cooling fluid.

To better address this concern, in a first aspect of the present disclosure, a method of estimating a thermal response of a semiconductor device to a fluid is provided, the method comprising:
modelling a thermal behaviour of a semiconductor device by creating a model comprising a network having a plurality of model elements, each model element comprising a thermal capacitor and a thermal resistor;
providing at least one model element of the plurality of model elements with a variable thermal capacitor having a variable thermal capacitance and a variable thermal resistor having a variable thermal resistance; and
mapping a flow rate of a fluid to the variable thermal capacitance and the variable thermal resistance.

The model may be applied to estimate e.g. a thermodynamic parameter associated with the semiconductor device. The variable elements in the model were found to be greatly improving the capability of the model to predict thermal interaction between the semiconductor device and the cooling fluid, in particular when the flow rate of the fluid is variable.

For example, this mapping may involve mapping a time-dependent profile of the flow rate of the fluid to a time-dependent profile of the variable thermal capacitance and a time-dependent profile of the variable thermal resistance. It was found that, when the flow rate and/or the cooling capacity of the cooling system is not constant, the variations can be modelled by adding time-dependent profile of model parameters such as thermal capacitance and thermal resistance.

The step of mapping the time-dependent profile may comprise applying a learned model, for example a forward neural network. This learned model may have been trained beforehand to learn the mapping. This learned model improves the computational efficiency of the mapping compared to other mapping methods.

The method may further comprise training the learned model to map the time-dependent profile of the flow rate of the fluid to the time-dependent profile of the variable thermal capacitance and/or the time-dependent profile of the variable thermal resistance, based on ground truth examples pre-calculated using a finite element method. After training, the learned model can map the profiles much more efficiently than the finite element method. Alternative to finite element methods, empirically measured testing data may be used to generate the ground truth examples for training the learned model.

The network may represent thermal flow in a semiconductor package from a semiconductor junction to the cooling fluid. This is a highly important part of the thermal flow in and around a semiconductor device.

According to another aspect of the present disclosure, an apparatus for predicting a thermal response of a semiconductor device to a fluid is provided. The apparatus comprises a processor system configured to:
model a thermal behaviour of a semiconductor device by a network having a plurality of model elements arranged in sequence, each model element comprising a thermal capacitor and a thermal resistor, wherein at least one model element of the plurality of model elements has a variable thermal capacitor having a variable thermal capacitance and a variable thermal resistor having a variable thermal resistance; and
map a flow rate of a fluid to the variable thermal capacitance and the variable thermal resistance.

The apparatus may further comprise a learned model configured to map a time-dependent profile of the flow rate of the fluid to a time-dependent profile of the variable thermal capacitance and a time-dependent profile of the variable thermal resistance.

The may further comprise the semiconductor device. The processor system may be further configured to: establish the time-dependent profile of the flow rate of the fluid; establish the time-dependent profile of the variable thermal capacitance and/or the time-dependent profile of the variable thermal resistance, using the learned model; and calculate an estimated time-dependent profile of the junction temperature, using the network including the variable thermal capacitor and the variable thermal resistor. This provides the semiconductor device with improved information to perform improved control of its operation taking into account heat accumulation in the semiconductor device.

According to another aspect of the present disclosure, a method of designing a semiconductor device with at least one semiconductor power die is provided. The method comprises:
designing the semiconductor device with the die and a cooling unit comprising a conduit for a fluid adjacent the semiconductor device and a pump configured to generate a time-dependent profile of a flow rate of the fluid near the die; and
calculating a temperature profile corresponding to the time-dependent profile of using the method set forth or the apparatus set forth.

The method of designing a semiconductor device may further comprise adapting the design of the semiconductor device based on the calculated temperature profile.

In the method of designing a semiconductor device, the adapting may comprise selecting a cooling fin design of a cooling fin heat exchanger adjacent to the conduit for the fluid or selecting the time-dependent profile of the flow rate to be used in the power conversion package based on the calculated temperature profile. This improves the thermodynamic behaviour of the semiconductor device.

According to another aspect of the present disclosure, a semiconductor device is provided, wherein the semiconductor device is designed according to the method set forth.

The person skilled in the art will understand that the features described above may be combined in any way deemed useful.

### Brief Description of the Drawings

The present disclosure will be described in further detail hereinafter with reference to the drawings. Similar items may be indicated by the same reference numerals throughout the drawings. The drawings are diagrammatic and may not be drawn to scale.
FIG. 1A shows a perspective view of a semiconductor device.
FIG. 1B shows a block diagram of a semiconductor device with an active cooling system.
FIG. 2 shows a thermal impedance as a function of time.
FIG. 3 shows a Foster thermal network diagram.
FIG. 4 shows a modified Foster thermal network diagram.
FIG. 5 illustrates examples of flow rate transient profiles.
FIG. 6 illustrates examples of thermal capacitances and thermal resistances in a Foster network under different flow rate conditions.
FIG. 7 illustrates a process of calculating parameters of a Foster thermal network.
FIG. 8 illustrates a process of generating ground truth examples for transient curves.
FIG. 9 illustrates an example involving a flow transient.
FIG. 10 illustrates a training process of a learned model.

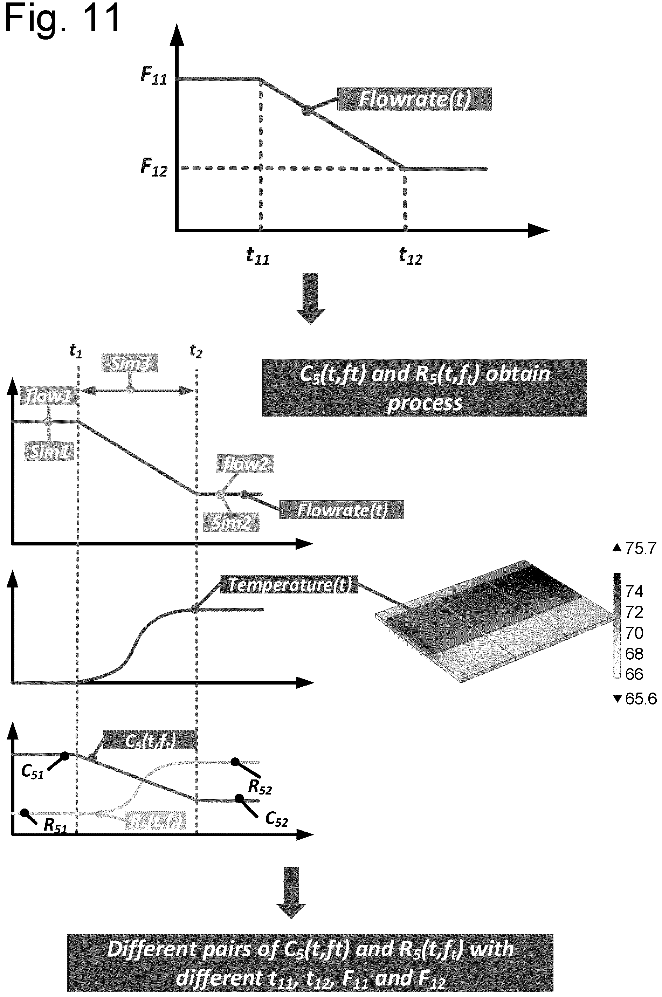

FIG. 11 illustrates generating ground truth examples for training a learned model.
FIG. 12 illustrates a junction temperature simulation architecture.
FIG. 13 illustrates a comparison between a proposed method and a finite element methods simulation.
FIG. 14 shows a block diagram illustrating a method of estimating a response of a cooling power on a semiconductor device.
FIG. 15 shows a block diagram illustrating aspects of a method of designing a semiconductor device with at least one semiconductor power die.

### Detailed Description

Certain exemplary embodiments will be described in greater detail, with reference to the accompanying drawings. The matters disclosed in the description, such as detailed construction and elements, are provided to assist in a comprehensive understanding of the exemplary embodiments. Accordingly, it is apparent that the exemplary embodiments can be carried out without those specifically defined matters. Also, well-known operations or structures are not described in detail, since they would obscure the description with unnecessary detail. Although the following detailed description provides detailed examples based on a Foster thermal network, similar techniques may be applied using a similar type of network model, such as a Cauer thermal network. Although the detailed examples show a network with 5 stages, the same principles can be applied to a network model having any suitable number of stages, preferably a plurality of stages.

SiC devices, which have a relatively small switching loss, are becoming a class of promising candidates for traction inverter design in electrical vehicles applications. These devices can switch with a faster speed with higher voltage ratings. However, compared with IGBT devices, SiC devices have a smaller die size, which results in quite some challenges for thermal design. Cooling elements can be provided to prevent excessive heating of the SiC devices. These cooling elements may comprise cooling fins, in certain embodiments.

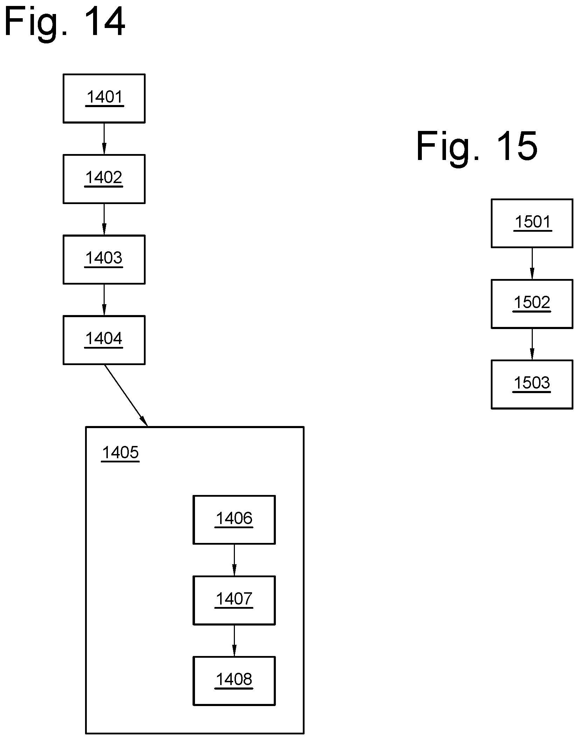

FIG. 14 shows a block diagram illustrating steps of a method of estimating a thermal response of a semiconductor device to a fluid. The method may begin with a training step 1401 to train a learned model, as will be elaborated in greater detail below. After the training step 1401 is completed, the learned model may be used as follows.

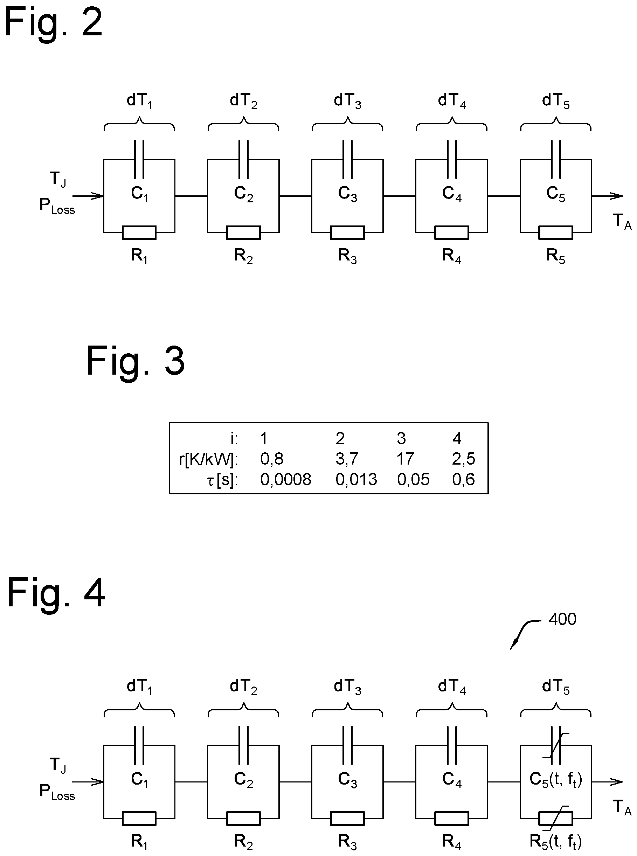

The method may begin by modelling 1402 a thermal behaviour of a semiconductor device 100 by creating a model comprising a network 400 having a plurality of model elements dT1, dT2, dT3, dT4, dT5 arranged in sequence. Each model element can comprise a thermal capacitor C and a thermal resistor R, which may be arranged in parallel as illustrated in FIG. 4. In step 1403, at least one model element dT5 of the plurality of model elements is provided with a variable thermal capacitor C5 having a variable thermal capacitance and/or a variable thermal resistor R5 having a variable thermal resistance. Preferably both are variable. Variable meaning, that the value can be dependent on time.

In step 1404, a flow rate ft of a fluid is mapped to the variable thermal capacitance C5 and the variable thermal resistance R5. This fluid may be a cooling fluid configured to flow with the given flow rate ft along the semiconductor device, in particular a heat exchanging portion thereof such as pin fins 101. The mapping may be done, for example, by the learned model that was trained beforehand (as illustrated in step 1401).

In step 1405, the model including the mapped variable thermal capacitance C5 and the mapped variable thermal resistance R5 is used to estimate a thermodynamic parameter associated with the semiconductor device. These thermodynamic parameters include usually junction temperature T_{J}, the loss P_{Loss}, and/or the ambient or reference temperature of the cooling fluid T_{A}. It will be understood that, for example, one or two of these parameters may be provided as a given, e.g. by means of measurement or estimation, and the model can then be solved to derive the remaining unknown parameter or parameters.

In certain embodiment, the mapping 1404 comprises mapping a time-dependent profile of the flow rate ft of the fluid to a time-dependent profile of the variable thermal capacitance C5 and/or a time-dependent profile of the variable thermal resistance R5. This mapping of entire profiles is particularly powerful and can be done by finite element methods or by a properly trained learned model.

The step of mapping 1404 the time-dependent profiles may be performed by applying a learned model 1001, for example a forward neural network or another type of artificial neural network, that has been trained to learn the mapping. How to train this learned model and generate ground truth examples is disclosed in detail hereinbelow.

In certain embodiments, the training step itself may be included in the method. For example, the method may comprise a training step of training 1401 the learned model 1002 to map the time-dependent profile of the flow rate ft of the fluid to the time-dependent profile of the variable thermal capacitance C5 and/or the time-dependent profile of the variable thermal resistance R5, based on ground truth examples pre-calculated using a finite element method. This will be explained in greater detail hereinbelow.

In certain embodiments, the network 400 may represent thermal flow in a semiconductor package 100 from a semiconductor 102 junction 106 to the cooling fluid 107. Parameters may include junction temperature T_{J}, loss P_{Loss}, and/or cooling fluid temperature T_{A}.

The step of applying 1405 the model may be performed, in certain embodiments, by following steps. Establishing 1406 the time-dependent profile of the flow rate ft of the fluid. This may be done by measuring the flow, or by reviewing specifications of a flow pump and making an estimate, for example. Establishing 1407 the time-dependent profile of the variable thermal capacitance C5 and/or the time-dependent profile of the variable thermal resistance R5. This involves e.g. the learned model 1001 to map the time-dependent profile of the flow rate ft that was established in step 1406. Calculating 1408 an estimated time-dependent profile of the junction temperature T_{J}. This may be calculated using the network 400 including the profiles of the variable thermal capacitor C5 and the variable thermal resistor R5, as established in step 1407.

Certain embodiments comprise an apparatus configured to perform the method set forth. Such an apparatus may comprise a computer processor system, such as a central processing unit CPU, or multiple CPU's working in parallel. The apparatus may comprise a memory to store computer code with instructions for the computer processing system that, when executed, cause the processor system to perform the method set forth. The memory may further be configured to store data such as model parameters, thermal resistances and thermal capacitances and profiles thereof, as well as flow profiles and semiconductor specifications. The apparatus can be a standalone computer. Alternatively, the apparatus can be part of the semiconductor device. In certain embodiments, the apparatus can process real-time measurements and calculate an estimate of parameters such as the corresponding thermal resistance profile and thermal capacitance profile, and optionally the loss and/or junction temperature. The apparatus may further comprise control unit to control operation of the semiconductor device in response to the estimated parameters, for example, limit the power to avoid overheating.

Such an apparatus may further comprise a learned model 1001, stored in the memory, and configured to map a time-dependent profile of the flow rate ft of the fluid to a time-dependent profile of the variable thermal capacitance C5 and a time-dependent profile of the variable thermal resistance R5.

FIG. 15 shows a block diagram illustrating aspects of a method of designing a semiconductor device with at least one semiconductor power die. The method comprises designing 1501 the semiconductor device 100 with the die 102 and cooling fins 101 and a cooling unit 104, 103 comprising a conduit 103 for a fluid 107 adjacent the semiconductor device 100 and a pump 104 configured to generate a time-dependent profile of a flow rate ft of the fluid near the die 102. The method proceeds by calculating 1502 a temperature profile using the method set forth. The method may further comprise, when deemed advantageous, adapting 1503 the design of the semiconductor device 100 based on the calculated temperature profile.

The step of adapting 1503 may comprise selecting a pin-fin design of a pin-fin heat exchanger 101 adjacent to the conduit 103 for the fluid 107 or selecting the time-dependent profile of the flow rate ft to be used in the semiconductor device 100 based on the calculated temperature profile.

This process may result in an improved semiconductor device 100.

FIG. 1A shows a pin-fin based power module package 100 with pin fins 101. Such a pin-fin cooled power module may be preferable to have an enhanced thermal design. However, this is not a limitation. Other cooling designs and other interface surfaces that allow heat to be transferred from the power module into the cooling fluid may be used and are to be considered within the scope of the present disclosure.

FIG. 1B shows a block diagram including the pin-fin based power module package 100 with pin fins 101, die 102, substrate 105 and junction 106. The figure further shows an active cooling system including a pump/cooler 104, and a tube forming a conduit 103 for the cooling fluid 107 running in a closed circuit along the pump 104 and the pin fins 101, so that there is thermodynamic interaction between the pin fins 101 and the cooling fluid 107.

A Foster thermal network is a specific type of thermal equivalent circuit used to model heat transfer in systems, such as power semiconductor devices. A Foster thermal network consists of an arrangement of thermal resistance-capacitance (RC) pairs, with each stage representing a particular time constant in the thermal response of the system. It provides a mathematical convenience for fitting measured thermal data, although its components do not necessarily represent the physical structure of the modelled system. Foster thermal networks are known to be used in electronics thermal modelling, such as for semiconductor devices and power electronics, where they can accurately represent the thermal impedance from junction to ambient (or cooling fluid) conditions.

FIG. 2 shows a diagram of a Foster thermal network with 5 stages indicated by dT₁, dT₂, dT₃, dT₄, and dT₅, respectively. The junction temperature T_{J} and the power loss P_{Loss} of a semiconductor device are connected to the first stage of the Foster thermal network. The environmental temperature or ambient temperature or reference temperature T_{A} is connected to the last stage of the Foster thermal network (the fifth stage in a five-stage Foster thermal network). In the case of an actively cooled semiconductor device, the reference temperature T_{A} may be the temperature of the cooling fluid. In a Foster thermal network, a "stage" may refer to a single parallel thermal resistance-capacitance (RC) pair that forms one component of the complete network. Each such stage consists of a thermal resistance (Rₜₕ) measured in Kelvin per Watt (K/W), and a thermal capacitance (Cₜₕ) measured in Joules per Kelvin (J/K). The thermal resistance Rₜₕ and thermal capacitance Cₜₕ are connected in parallel with each other in the network, and each stage may represent a specific time constant (τ = Rₜₕ × Cₜₕ) in the thermal response of the system. The values of Rₜₕ and Cₜₕ in each stage are typically determined by curve-fitting measured thermal data. The sum of all resistances across all branches equals the total steady-state thermal resistance of the system.

The state of the art mainly assumes that the flowrate of the coolant is a fixed value, which is not generally the case in real applications. Coolant pump behaviour always results in coolant flowrate transients. The present disclosure includes a proposal for an improved method to evaluate coolant flowrate transients' impact on SiC junction temperature, which show not only a similar accuracy as finite element (FEM) simulation but also a faster simulation speed. Moreover, the method is not limited to SiC and may equally be applied to other power modules with other types of semiconductors than SiC.

FIG. 3 shows the numerical values of parameters of a Foster network provided by a power semiconductor supplier as part of the specification of an IGBT device. For each stage i of the Foster network, FIG. 3 shows a value for thermal resistance Rᵢ and time constant τᵢ. Such parameters can help the engineer to estimate the junction temperature of the semiconductor device, whether IGBT or SiC. This thermal network is defined based on a fixed coolant flowrate. However, in practice coolant flowrate is always changing due to pump dynamic behaviour in EV applications. For example, the time that the cooling system needs to transition from one flowrate to another flowrate may be typically about 2 to 3 seconds.

The present disclosure may be considered to include a multi-physics simulation approach by combining finite element method (FEM) simulation and circuit level simulation to obtain an accurate estimation of SiC junction temperature in case of coolant flowrate transients. This not only takes quite a lot of time but also have divergence problem easily, which may lead to unsuccessful simulation. The techniques disclosed herein may provide an improved method to define the transient thermal network in case of flowrate transition by only modifying part of the conventional Foster thermal network, using FEM results of only the pin-fin section of the power module. This way, the other sections of the power module, such as the die and its layers, need not be simulated by FEM for all the different flow rates. The modified Foster thermal network may be used in an electrical circuit simulation system (such as PLECS, a simulation software by Plexim, Zürich) to estimate SiC junction temperature or other electric component temperature connected to time-varying coolant conditions. The techniques disclosed herein may reduce the dependency on time-consuming multi-physics based methods. Accuracies of less than 3 Kelvin deviation from the real temperature were achieved with the method.

An aspect of the present disclosure provides for an improved junction temperature estimation method. This method may have increased modelling efficiency considering coolant transients, for example using artificial intelligence (AI) algorithm to perform part of the modelling without sacrificing modelling accuracy. The model described herein can be used in different power electronics simulation tools.

Power semiconductor may be used in liquid or air-forced cooling conditions. The thermodynamic processes between the power semiconductor and the cooling conditions may be estimated using FEM (finite element methods). The detailed computer aided design (CAD) model of a power semiconductor together with a cooling channel can be used in FEM simulation software, such as Ansys. With such an analysis one can make a very detailed CAD modelling, which needs a lot of computational power and time to calculate simulation results. Detailed CAD modelling includes modelling of a sintering layer and modelling of a semiconductor die, which may not be easily available. And FEM simulation time of a very detailed model of power semiconductor with coolant will take days or even weeks, even on high-end equipment.

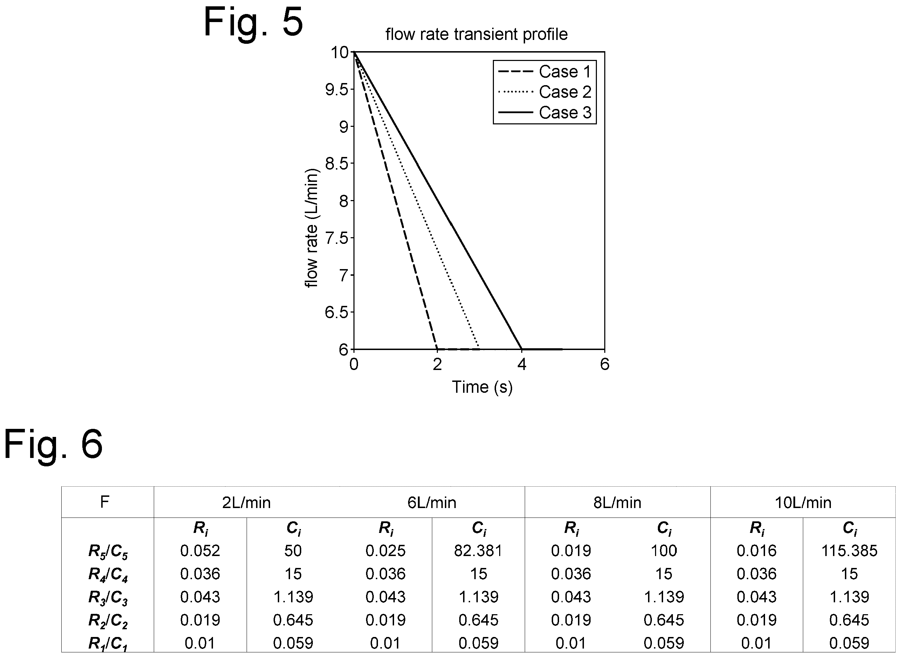

FIG. 4 shows a diagram of a modified Foster thermal network. Compared to the conventional Foster network shown in FIG. 2, one of the stages of the Foster network has been provided with variable parameters. In particular the last stage 5, the stage furthest away from the junction, has variable parameters. In particular the thermal resistance and the thermal capacitance have been made variable in the modified Foster thermal network shown in FIG. 4. Thus, instead of using constant R5 and C5, time-dependent profiles R5(t, ft) and C5(t, ft) are used. In this notation, t denotes time, and ft denotes an instantaneous flow rate value at time t, and as shown in Fig. 3. It will be noted that instead of just the instantaneous flow rate ft, a complete time-dependent flow rate profile may be provided as a parameter to R5 and C5. Because a change of instantaneous flow rate at a time t₀ can have an effect at later time points t > t₀. FIG. 5 shows three exemplary time profiles of a flow rate of the cooling fluid. The diagram shows time in seconds on the horizontal axis versus flow rate in litres per minute on the vertical axis for three examples (case 1, case 2, and case 3). It will be understood that instead of flow rate another kind of cooling power can be expressed (e.g. temperature of the cooling fluid, or electric power of a Peltier element).

FIG. 6 shows results of empirically modelling a conventional Foster thermal network as shown in FIG. 2 modelling an actively cooled power semiconductor under different circumstances regarding four different exemplary flow rates F of the cooling fluid. From the results, it is apparent that only the fifth stage, representing the side of the package adjacent to the cooling system, is affected by the changing flow rates. The other stages' parameters R and C are barely if not at all influenced by the flow rate. Therefore, the modified Foster thermal network described herein may accurately model a situation with varying flow rates.

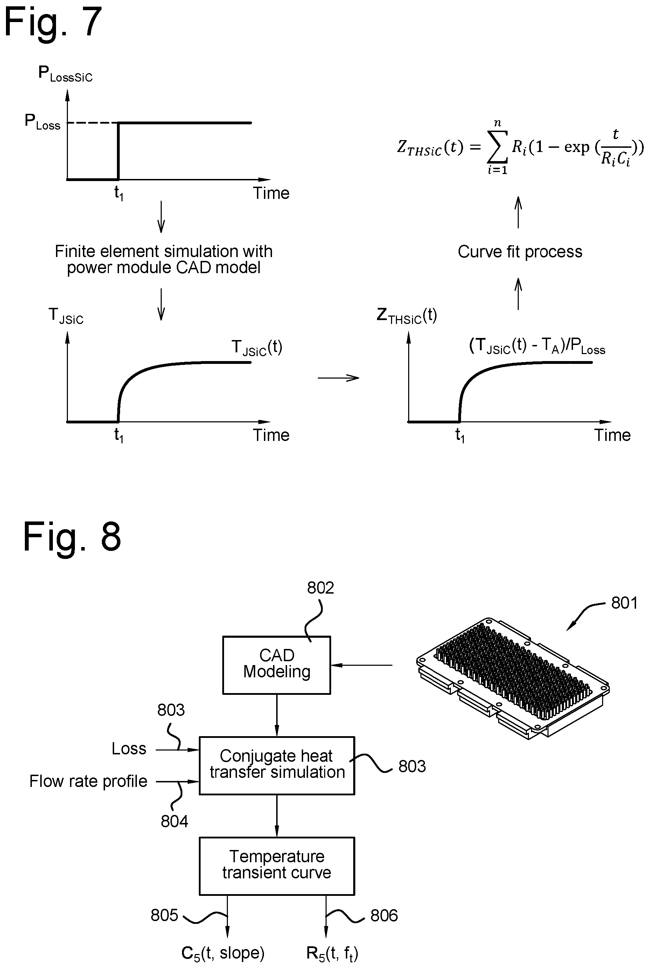

The table in FIG. 6 was extracted based on the following process. A transient thermal simulation may be performed with SiC loss step up at ***t₁*** as shown by ***P_{LossSiC}*** in Fig. 7. Junction temperature curve of SiC may be obtained by this simulation as shown by ***T_{JSiC}***(t)*.* Thermal impedance curve ***Z_{THSiC}***(t) is calculated by using (*T_{JSiC}*(*t*) *- T_{A}*)/*P_{Loss}*, where ***T_{A}*** is the coolant temperature. A curve fit process is performed with ***Z_{THSiC}***(t) by using the equation *Z_{THSiC}*(*t*) = ${\sum }_{i = 1}^{n} {R}_{i} \left(1-exp\left(\frac{t}{{R}_{i} {C}_{i}}\right)\right)$*.* Through selecting proper value of n, several pairs of Ri and Ci are generated for the Foster thermal network. Hereby, n is selected to be 5. However, this is not a limitation. Other values of n greater than 1 may be used instead. So R1 through R5 and C1 through C5 were generated as shown in FIG. 6.

Even though the components of a Foster thermal network do not map directly to specific parts of the power semiconductor device being modelled, it can be still found that the coolant flowrate change only affects the value of the last stage of the Foster thermal network. It can be roughly concluded that R5 and C5 represent the cooling surface (e.g. the pin-fin part of the power module), which is the only part that actually interacts with the coolant.

This idea was exploited to develop a method to efficiently extract the R and C parameters of this stage of the Foster thermal network. FIG. 8 shows such a process of extracting R5(t, ft) and C5(t, ft).

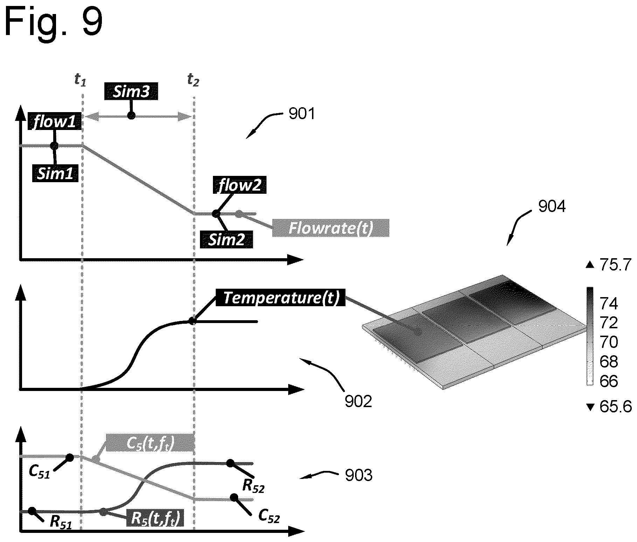

Only the CAD modelling 802 of the power module pin-fin 801 (without needing to include power module internal structure) and the coolant needs to be put into the FEM model. Loss information 803 of the power module and flowrate changing profile 804 are also put into the FEM simulation 803. As a results, temperature transient curve 804 is obtained in the FEM simulation, including the corresponding C and R parameters of the stage of the Foster thermal network representing the surface interacting with the cooling fluid. FIG. 9 shows an example of the temperature transient curve obtained in such an FEM simulation.

Three simulations are performed, as illustrated in FIG. 9. The example shows a flowrate profile 901 with constant rate before time t1, decreasing flowrate between times t1 and t2, and another constant rate after time t2, all illustrated in arbitrary units.

First, a conjugate heat transfer simulation is performed for flowrate before t1. Since before t1, the flowrate is not changed based on the flowrate curve 901, a fixed value for temperature T, R5 and C5 will be obtained, denoted R51 and C51, by following the process shown in Fig. 8. This is shown in diagrams 902 and 903.

A conjugate heat transfer simulation is performed for flowrate after t2. Since after t2, the flowrate is not changed based on the flowrate curve 901, a fixed value for temperature T, R5 and C5 will be obtained, denoted by R52 and C52, by following the process shown in FIG. 7.

A transient conjugate heat transfer simulation is performed for flowrate between t1 and t2. A temperature curve is obtained as shown by the temperature curve 902 showing temperature change over time in arbitrary units. Based on the thermal resistance equation
${R}_{5} \left(t, {f}_{t}\right) = \left(Temperature\left(t\right)-{T}_{A}\right) / {P}_{Loss} \left(t\right) ,$
a thermal resistance changing curve shall be extracted as by the R5(t, ft) curve in diagram 903. By combining R51, R52 and R5(t, ft) a complete thermal resistance transient curve is obtained.

A similar approach is used for thermal capacitance C51, C52, and C5(t, ft). Herein, a linear relationship may be assumed because the flowrate is changing linearly as shown in the flowrate curve 901.

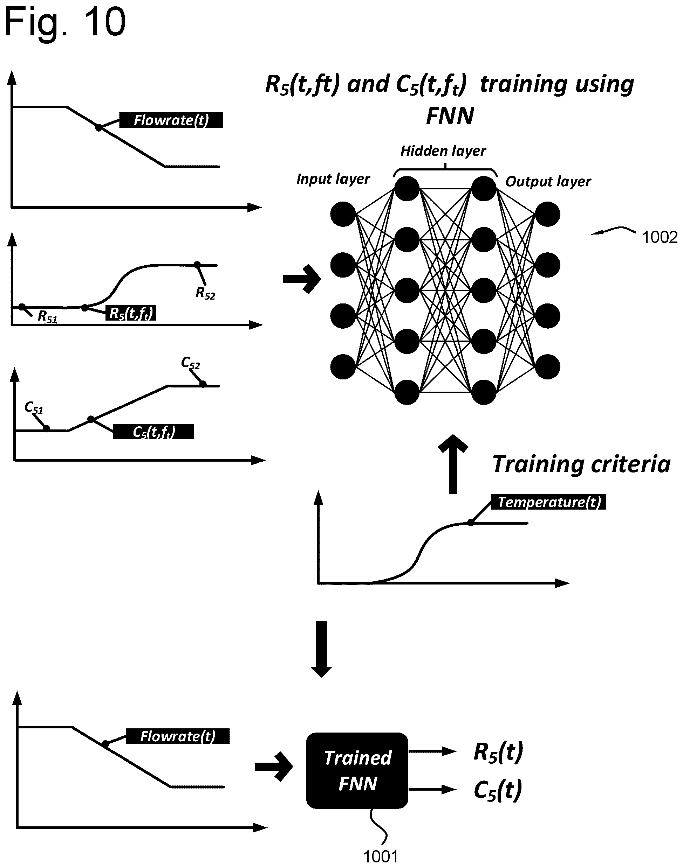

A learned model, such as an artificial neural network (ANN) may be used to learn the relationship between R5(t,ft) and Flowrate(t), between C5(t,ft) and Flowrate(t) respectively, as illustrated in FIG. 10. And during the training process, the Temperature(t) curve obtained from the FEM simulation may be used as a criterion to calibrate the algorithm. Hereby, a Feedforward Neural Network (FNN) may be a suitable neural network type. Other type of ANN may also be suitable for this application, such as Convolutional Neural Network, Recurrent Neural Network, Generative Adversarial Network, and so on.

In order to make sure that the ANN algorithm 1001, 1002 is well trained, a proper dataset for training may be generated, as illustrated by means of example in FIG. 10. Throughout the dataset of training examples, t11, t12, F11 and F12 can be changed as much as possible to provide different Flowrate(t) curves for training. These different curves can be used to generate different pairs R5(t, ft) and C5(t, ft) to serve as the ground truth examples for an ANN training algorithm.

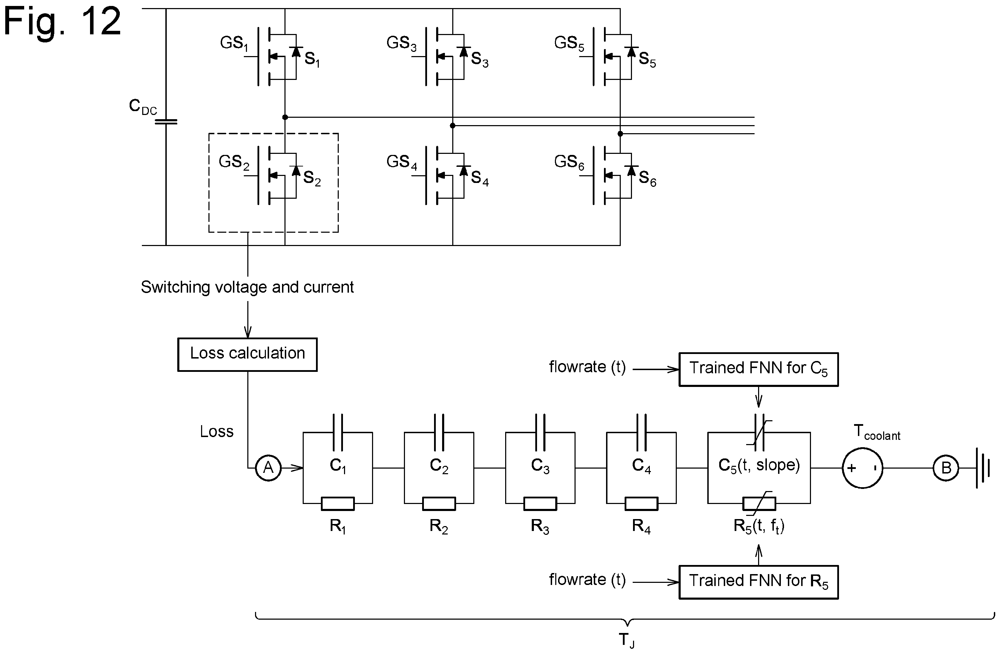

The trained artificial neural network 1001 can be used to predict R5(t) and C5(t) based on real-time flowrate ft as calculated by the simulation as shown in FIG. 10 and FIG. 12, which shows an example of junction temperature simulation for a SiC power module with three phase two level topology in an electrical circuit simulation model. Hereby, switching current of power semiconductor devices can be used to calculate the loss that includes switching loss and conduction loss. The total loss is used in the Foster thermal network with the thermal resistances and thermal capacitances, e.g. R1 through R5 and C1 through C5, to calculate the junction temperature of SiC devices.

The proposed techniques also suit for IGBT, GaN as well as other topologies than SiC, such as three level topology.

The techniques disclosed herein make the evaluation of coolant transient process impact on power semiconductor junction temperature possible in electrical simulation platform (such as PLECS, Simulation or customized code) more available.

The conventional analysis process for this type of coolant flowrate transient impact mainly depends on FEM simulation using detailed power semiconductor model together with pin-fin shape and cooling channel. Such kind of FEM simulation takes days of simulation and sometimes it is even not convergent, which makes it impossible to get reliable simulation results. But using the techniques described herein, the FEM simulation may be limited to the pin-fin part of the power module together with the cooling channel. This way the simulation task can be reduced, which can reduce the simulation time by more than 50% in many practical embodiments.

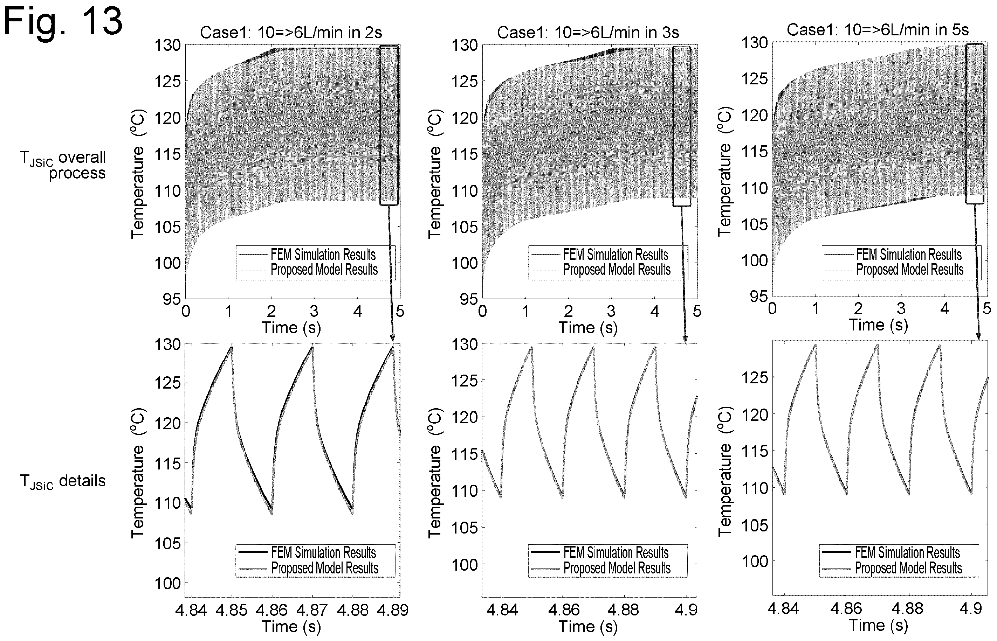

At the same time, the techniques disclosed herein may provide quite high accuracy compared with FEM simulation, as shown in FIG. 13. Each diagram in FIG. 13 shows FEM simulation results vs. proposed model results. The bottom diagrams show the same curves as the top diagrams, but for a smaller time interval as indicated in the Figure. Three cases, illustrated in the diagrams from left to right: coolant flowrate reduced from 10L/min to 6L/min within 2, 3, 4 seconds respectively is presented. It can be seen that with a reduced flowrate, the junction temperature of SiC is increased. The error between the method disclosed herein and FEM simulation is less than 2 Kelvin. As shown by FIG. 13, coolant flowrate decrease brings a junction temperature increase to SiC devices.

The proposed methods may be used, for example, to evaluate the impact of different coolant flowrate changing processes on power semiconductor device junction temperature so as to set the optimized coolant flowrate changing process that can be used to select, optimize, and/or control a proper pump for the cooling system.

Alternatively or additionally, the proposed methods may be used, for example, to optimize the cooling surface design (e.g. pin-fin design) for power semiconductor modules, to make sure that the coolant flowrate changing process has the least impact on SiC junction temperature under the provided circumstances, e.g. if the coolant flowrate changing process is fixed. Other manners to improve semiconductor and/or cooling system design, and their operation modes, using the provided tools, may be apparent to the skilled person.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiments disclosed, but that the present disclosure will include all embodiments falling within the scope of the appended claims.

## Claims

1. A method of estimating a thermal response of a semiconductor device to a cooling power, the method comprising
modelling (1402) a thermal behaviour of a semiconductor device (100) by creating a model comprising a network (400) having a plurality of model elements (dT₁, dT₂, dT₃, dT₄, dT₅) arranged in sequence, each model element comprising a thermal capacitor (C) and a thermal resistor (R);
providing (1403) at least one model element (dT₅) of the plurality of model elements with a variable thermal capacitor (C5) having a variable thermal capacitance and/or a variable thermal resistor (R5) having a variable thermal resistance;
mapping (1404) a flow rate (ft) of a fluid to the variable thermal capacitance (C5) and the variable thermal resistance (R5); and
applying (1405) the model including the mapped variable thermal capacitance (C5) and the mapped variable thermal resistance (R5) to estimate a thermodynamic parameter (T_{J}, P_{Loss}, T_{A}) associated with the semiconductor device.

2. The method of claim 1, wherein the mapping (1404) comprises mapping a time-dependent profile of the flow rate (ft) of the fluid to a time-dependent profile of the variable thermal capacitance (C5) and/or a time-dependent profile of the variable thermal resistance (R5).

3. The method of claim 2, wherein the mapping (1404) the time-dependent profiles comprises applying a learned model (1001), for example a forward neural network, that has been trained to learn the mapping.

4. The method of claim 3, further comprising training (1401) the learned model (1002) to map the time-dependent profile of the flow rate (ft) of the fluid to the time-dependent profile of the variable thermal capacitance (C5) and/or the time-dependent profile of the variable thermal resistance (R5), based on ground truth examples pre-calculated using a finite element method.

5. The method of any preceding claim, wherein the network (400) represents thermal flow in a semiconductor package (100) from a semiconductor (102) junction (106) to the cooling fluid (107).

6. The method of any preceding claim, wherein applying (1405) the model comprises:
establishing (1406) the time-dependent profile of the flow rate (ft) of the fluid;
establishing (1407) the time-dependent profile of the variable thermal capacitance (C5) and/or the time-dependent profile of the variable thermal resistance (R5), using the learned model (1001) to map the time-dependent profile of the flow rate (ft); and
calculating (1408) an estimated time-dependent profile of the junction temperature (T_{J}), using the network (400) including the variable thermal capacitor (C5) and the variable thermal resistor (R5).

7. An apparatus for predicting a thermal response of a semiconductor device to a fluid, the apparatus comprising a processor system configured to:
model (1401) a thermal behaviour of a semiconductor device (100) by creating a model comprising a network (400) having a plurality of model elements (dT₁, dT₂, dT₃, dT₄, dT₅) arranged in sequence, each model element comprising a thermal capacitor (C) and a thermal resistor (R);
provide (1403) at least one model element (dT₅) of the plurality of model elements with a variable thermal capacitor (C5) having a variable thermal capacitance and/or a variable thermal resistor (R5) having a variable thermal resistance;
map (1404) a flow rate (ft) of a fluid to the variable thermal capacitance (C5) and the variable thermal resistance (R5); and
apply (1405) the model including the mapped variable thermal capacitance (C5) and the mapped variable thermal resistance (R5) to estimate a thermodynamic parameter (T_{J}, P_{Loss}, T_{A}) associated with the semiconductor device.

8. The apparatus of claim 7, further comprising a learned model (1001) configured to map a time-dependent profile of the flow rate (ft) of the fluid to a time-dependent profile of the variable thermal capacitance (C5) and a time-dependent profile of the variable thermal resistance (R5).

9. The apparatus of claim 8, further comprising the semiconductor device (100) and a cooling system (103, 104) comprising the fluid (107), wherein the processor system is further configured to:
establish (1406) the time-dependent profile of the flow rate (ft) of the fluid;
establish (1407) the time-dependent profile of the variable thermal capacitance (C5) and/or the time-dependent profile of the variable thermal resistance (R5), using the learned model (1001) to map the time-dependent profile of the flow rate (ft); and
calculate (1408) an estimated time-dependent profile of the junction temperature (T_{J}), using the network (400) including the variable thermal capacitor (C5) and the variable thermal resistor (R5).

10. A method of designing a semiconductor device with at least one semiconductor power die, the method comprising
designing (1501) the semiconductor device (100) with the die (102) and cooling fins (101) and a cooling unit (104, 103) comprising a conduit (103) for a fluid (107) adjacent the semiconductor device (100) and a pump (104) configured to generate a time-dependent profile of a flow rate (ft) of the fluid near the die (102); and
calculating (1502) a temperature profile using the method according to any one of claims 1 to 6 or the apparatus according to any one of claims 7 to 9.

11. The method of claim 10, further comprising adapting (1503) the design of the semiconductor device (100) based on the calculated temperature profile.

12. The method of claim 11, wherein the adapting (1503) comprises selecting a pin-fin design of a pin-fin heat exchanger (101) adjacent to the conduit (103) for the fluid (107) or selecting the time-dependent profile of the flow rate (ft) to be used in the semiconductor device (100) based on the calculated temperature profile.

13. A semiconductor device (100) designed according to the method of any one of claims 10 to 12.
